# EUROPEAN PATENT APPLICATION

(11) **EP 4 442 603 A1**
(43) Date of publication of application: **09.10.2024**
(21) Application number: 22901222.4
(22) Date of filing: 28.11.2022
(51) Int. Cl.: B65D 65/46, C08L 29/04, C11D 7/22, C08J 5/18, C08K 3/36

(54) **WATER-SOLUBLE FILM FOR PACKAGE CAPSULE OF LIQUID DETERGENT, AND LIQUID DETERGENT PACKAGE CAPSULE**

(30) Priority: 30.11.2021 JP 2021194566
(71) Applicant: Aicello Corporation, Toyohashi-shi, Aichi 441-1115 (JP)
(72) Inventor: TANIKAWA, Atsushi, Toyohashi-shi, Aichi 441-1115 (JP)
(74) Representative: Meissner Bolte Partnerschaft mbB
(86) International application number: PCT/JP2022/043713
(87) International publication number: WO 2023/100789

(57) **Abstract**

Provided is a water-soluble film for packaging a liquid detergent, the water-soluble film having excellent transparency and making it possible to improve the tensile strength of a water-soluble film comprising an anion-group-modified polyvinyl alcohol resin as a polyvinyl alcohol resin even when the wall thickness of the water-soluble film is reduced. This water-soluble film for a package capsule of a liquid detergent contains an anion-group-modified polyvinyl alcohol resin as a polyvinyl alcohol resin, a plasticizer, and silica particles that are not subjected to a hydrophobization treatment. The silica particles have an average particle diameter of 0.1-4.6 µm and a specific surface area of 10-490 m²/g, and are contained in the water-soluble film in an amount of 0.5-10 parts by mass per 100 parts by mass of the polyvinyl alcohol resin.

## Description

### TECHNICAL FIELD

The present invention relates to a water-soluble film for a package capsule of a liquid detergent and a liquid detergent package capsule.

### BACKGROUND ART

As a package capsule for enclosing a liquid detergent such as a laundry detergent, a dish detergent, or a household care composition, one formed by bonding predetermined portions of a water-soluble film containing a polyvinyl alcohol resin as a main component is used. When the package capsule in which the liquid detergent is enclosed is used for, for example, washing, at least a part of the package capsule is dissolved in water at a start of washing, and the liquid detergent is released to form a washing liquid. During the washing, the package capsule is dissolved in the washing liquid and discharged together with the washing liquid after the washing is completed.

When the liquid detergent is enclosed in the package capsule and provided for conveyance or the like, it is necessary to prevent a situation in which bonding portions of the package capsule are peeled off. To prevent such a situation, it is necessary to improve the sealing property of the bonding portions of the package capsule.

As a package capsule capable of improving the sealing property of the bonding portions of the package capsule made of the water-soluble film, the following PTL 1 proposes a package capsule containing a predetermined number or more of inorganic particles such as silica having a particle diameter of 2 µm or more in a cross-sectional portion in a predetermined range from an interface between bonding surfaces of a water-soluble film made of a polyvinyl alcohol resin.

### CITATION LIST

### PATENT LITERATURE

PTL 1: WO2018/123893

### SUMMARY OF INVENTION

### TECHNICAL PROBLEM

According to the package capsule of PTL 1 described above, it is possible to improve the sealing property of the bonding surfaces of the water-soluble film made of the polyvinyl alcohol resin and to prevent the situation in which the bonding portions are peeled off when the package capsule in which the liquid detergent is enclosed is provided for conveyance or the like.

Incidentally, in recent years, to reduce a risk of residual dissolution of the package capsule in which the liquid detergent is enclosed during the washing, there has been a demand for thinning the water-soluble film made of polyvinyl alcohol resin that forms the package capsule. In addition, to improve the design of the package capsule, the shape of the package capsule may become complicated, and the water-soluble film may be stretched more than that in the related art and may be partially thinned. However, when the water-soluble film that forms the package capsule is thinned, the tensile strength of the water-soluble film decreases, and the package capsule is broken starting from a portion other than the bonding surfaces of the package capsule, which makes it unsuitable for practical use. To prevent breakage of the package capsule, it is important to improve the pressure-resisting strength of the package capsule in addition to the tensile strength of the water-soluble film itself.

However, according to studies by the inventors of the present invention, in the package capsule described in PTL 1 described above, only the sealing property of the bonding surfaces is improved, and breakage may occur from a portion other than the bonding portions.

Meanwhile, it is effective to blend silica particles in the water-soluble film to improve the tensile strength of the thinned water-soluble film, but the transparency of the water-soluble film will decrease and the design of the package capsule may decrease.

### SOLUTION TO PROBLEM

An object of the present invention is to solve the above-described technical problem and to provide a water-soluble film for a package capsule of a liquid detergent that can improve the tensile strength of the water-soluble film made of a polyvinyl alcohol resin even when the water-soluble film is thinned by blending silica particles and that has good transparency, and further, a liquid detergent package capsule that has an improved pressure-resisting strength.

The water-soluble film for a package capsule of a liquid detergent that can achieve the above-described object includes: an anionic group-modified polyvinyl alcohol resin as a polyvinyl alcohol resin; a plasticizing agent; and silica particles that are not hydrophobized, in which the silica particles have an average particle diameter of 0.1 µm to 4.6 µm and a specific surface area of 10 m²/g to 490 m²/g, and are contained in 0.5 parts by mass to 10 parts by mass with respect to 100 parts by mass of the polyvinyl alcohol resin. The water-soluble film essentially contains the anionic group-modified polyvinyl alcohol resin as the polyvinyl alcohol resin, and may contain a cationic group-modified polyvinyl alcohol resin and an unmodified polyvinyl alcohol resin as necessary as long as the object of the present invention and the solubility are not impaired.

In the case where the plasticizing agent is contained in 8 parts by mass to 55 parts by mass with respect to 100 parts by mass of the polyvinyl alcohol resin, a soft water-soluble film for a package capsule of a liquid detergent can be obtained , which is preferable.

It is preferable that in the water-soluble film for a package capsule of a liquid detergent, for a tensile strength of the water-soluble film, a tensile strength of the water-soluble film after storing a water-soluble film having a thickness of 75 µm in an environment having a temperature of 40°C and a humidity of 80%RH for 7 days is 19 MPa or more and is 1.2 times or more with respect to a tensile strength of a control water-soluble film that contains only no silica particles and has the same thickness as the water-soluble film.

It is preferable that in the water-soluble film for a package capsule of a liquid detergent, the water-soluble film has a haze of 50% or less.

A liquid detergent package capsule that can achieve the above-described object is a liquid detergent package capsule in which a liquid detergent is encapsulated in a capsule formed by bonding end edges of at least two of the water-soluble films, having a pressure-resisting strength 1.2 times or more a pressure-resisting strength of a control liquid detergent package capsule formed of a control water-soluble film that has the same thickness as the water-soluble film and contains only no silica particles.

The liquid detergent package capsule has a pressure-resisting strength of 700 N or more.

### ADVANTAGEOUS EFFECTS OF INVENTION

According to the water-soluble film for a package capsule of a liquid detergent according to the present invention, the tensile strength of the water-soluble film can be improved as compared with that in the related art, and transparency equivalent to that in the related art can be exhibited. The pressure-resisting strength of the liquid detergent package capsule according to the present invention using such a water-soluble film can be improved. Further, even when the thickness of the water-soluble film forming the liquid detergent package capsule is reduced or the shape of the liquid detergent package capsule is complicated, it is possible to suppress breakage of the liquid detergent package capsule starting from a portion other than bonding surfaces while maintaining the transparency of the water-soluble film. In addition, the water-soluble film for a package capsule contributes to a reduction of raw materials and a reduction of environmental load, due to thinning.

### DESCRIPTION OF EMBODIMENTS

A water-soluble film for a package capsule of a liquid detergent (hereinafter, simply referred to as a water-soluble film) according to the present invention is mainly made of an anionic group-modified polyvinyl alcohol resin. As the anionic group-modified polyvinyl alcohol resin, known ones can be used. The anionic group of the anionic group-modified polyvinyl alcohol is not particularly limited, and examples thereof include a carboxyl group, a sulfonic acid group, and a phosphoric acid group.

The anionic group-modified polyvinyl alcohol resin is not particularly limited, and examples thereof include a maleic acid-modified polyvinyl alcohol resin, an itaconic acid-modified polyvinyl alcohol resin, an acrylic acid-modified polyvinyl alcohol resin, a methacrylic acid-modified polyvinyl alcohol resin, and a 2-acrylamido-2-methylpropanesulfonic acid-modified polyvinyl alcohol resin.

In the anionic group-modified polyvinyl alcohol resin, the ratio (modification degree) of the number of moles of monomers reacted for modification to the number of moles of all monomers constituting the anionic group-modified polyvinyl alcohol resin is preferably 0.1 mol% to 10 mol%, more preferably 0.5 mol% to 6.0 mol%, and still more preferably 1.0 mol% to 4.3 mol%. In the case where the modification degree of the anionic group-modified polyvinyl alcohol resin is less than 0.1 mol%, the solubility in water tends to decrease, whereas in the case where the modification degree exceeds 10 mol%, the productivity of the anionic group-modified polyvinyl alcohol resin tends to decrease.

The anionic group-modified polyvinyl alcohol resin can be obtained by performing polymerization by a known method such as a solution polymerization method, a bulk polymerization method, or a suspension polymerization method to obtain a polymer and then saponifying the polymer. The saponification is performed by using an alkali or an acid, and it is particularly preferable to use an alkali. The saponification degree (average saponification degree) is not particularly limited, but is preferably in a range of 86 mol% to 100 mol% because the solubility in water is easily adjusted, more preferably 87 mol% to 99 mol%, and still more preferably 88 mol% to 98 mol%. In the case where the saponification degree is less than 86 mol%, the water solubility of the anionic group-modified polyvinyl alcohol resin tends to decrease. The saponification degree can be measured according to JIS K6726 (1994).

The anionic group-modified polyvinyl alcohol resin used in the present invention may contain a repeating unit constituted by the following monomers within a range in which the effects of the present invention are not impaired. Examples of the monomers include olefins such as ethylene, propylene, isobutylene, α-octene, α-dodecene, and α-octadecene, complete alkyl esters of unsaturated acids such as acrylic acid, methacrylic acid, crotonic acid, maleic acid, maleic anhydride, and itaconic acid, nitriles such as acrylonitrile and methacrylonitrile, amides such as acrylamide and methacrylamide, alkylvinylethers, N-acrylamidemethyltrimethyl ammonium chloride, allyltrimethylammonium chloride, dimethyldiallylammonium chloride, dimethylallyl vinyl ketone, N-vinylpyrrolidone, vinyl chloride, vinylidene chloride, polyoxyalkylene (meth)allyl ethers such as polyoxyethylene (meth)allyl ether and polyoxypropylene (meth)allyl ether, polyoxyalkylene (meth)acrylates such as polyoxyethylene (meth)acrylate and polyoxypropylene (meth)acrylate, polyoxyalkylene (meth)acrylamides such as polyoxyethylene (meth)acrylamide and polyoxypropylene (meth)acrylamide, polyoxyethylene (1-(meth)acrylamide-1,1-dimethyl propyl) ester, polyoxyethylene vinyl ether, polyoxypropylene vinyl ether, polyoxyethylene allylamine, polyoxypropylene allylamine, polyoxyethylene vinylamine, polyoxypropylene vinylamine, and diacrylacetonamide.

In addition, examples thereof include cationic group-containing monomers such as N-acrylamidomethyltrimethylammonium chloride, N-acrylamidoethyltrimethylammonium chloride, N-acrylamidopropyltrimethylammonium chloride, 2-acryloxyethyltrimethylammonium chloride, 2-methacryloxyethyltrimethylammonium chloride, 2-hydroxy-3-methacryloyloxypropyltrimethylammonium chloride, allyltrimethylammonium chloride, methallyltrimethylammonium chloride, 3-butenetrimethylammonium chloride, dimethyldiallylammonium chloride, and diethyldiallylammonium chloride.

The polymerization degree of the anionic group-modified polyvinyl alcohol resin is preferably 700 or more, more preferably 900 or more, and still more preferably 1200 or more. In the case where the polymerization degree is less than 700, the mechanical property of the water-soluble film and the pressure-resisting strength of the finally obtained liquid detergent package capsule tend to decrease. The upper limit of the polymerization degree is preferably 2500, more preferably 2200 or less, and still more preferably 2000 or less. In the case where the polymerization degree exceeds 2500, the water solubility of the water-soluble film tends to decrease.

The 4 mass% aqueous solution viscosity of the anionic group-modified polyvinyl alcohol resin at 20°C is not particularly limited but is preferably 7.0 mPa s to 55 mPa s, more preferably 9.0 mPa s to 50 mPa s, and still more preferably 12 mPa s to 35 mPa s. In the case where the 4 mass% aqueous solution viscosity is less than 7.0 mPa s, the mechanical property of the water-soluble film and the pressure-resisting strength of the finally obtained liquid detergent package capsule tend to decrease. In the case where the 4 mass% aqueous solution viscosity exceeds 55 mPa s, the water solubility of the water-soluble film tends to decrease. The 4 mass% aqueous solution viscosity is measured according to JIS K6726 (1994).

The content of the anionic group-modified polyvinyl alcohol resin in 100 parts by mass of the water-soluble film according to the present invention is preferably 60 parts by mass to 97 parts by mass because the water content in the water-soluble film can be easily adjusted to an appropriate range. In the case where the content is less than 60 parts by mass, the tensile strength of the water-soluble film may be insufficient, whereas in the case where the content exceeds 97 parts by mass, the flexibility of the water-soluble film may be insufficient.

A plurality of types of anionic group-modified polyvinyl alcohol resins may be used in the water-soluble film according to the present invention. In this case, anionic group-modified polyvinyl alcohols that differ in at least one of the molecular weight, the polymerization degree, the 4 mass% aqueous solution viscosity, the saponification degree, the modification degree, the modification type, and the like can be adopted. Unmodified polyvinyl alcohols may be contained as necessary within a range in which the object of the present invention and the solubility are not impaired.

Since the water-soluble film according to the present invention is formed into the liquid detergent package capsule and is transported, stored, and used even in a high-temperature and high-humidity region or a cold region, it is required to have high tensile strength and durability, and impact resistance at low temperatures is also important. The water-soluble film according to the present invention, which is required to have such properties, can reduce glass transition point and can also improve durability at low temperatures and the solubility in water by containing a plasticizing agent. In addition, by containing a plasticizing agent, the tensile elasticity can be reduced, and a flexible water-soluble film can be obtained.

The plasticizing agent is not particularly limited as long as it is generally used as a plasticizing agent for a water-soluble film. Specific examples thereof include polyhydric alcohols such as glycerin, diglycerin, diethylene glycol, trimethylolpropane, triethylene glycol, dipropylene glycol, and propylene glycol, polyethers such as polypropylene glycol, phenol derivatives such as bisphenol A and bisphenol S, sugar alcohols such as sorbitol, amide compounds such as N-methylpyrrolidone, compounds with ethylene oxide added to polyhydric alcohols such as glycerin, pentaerythritol, and sorbitol, and polyethylene glycol such as PEG400. These may be used alone or in combination of two or more types.

Among the plasticizing agents described above, glycerin, diglycerin, sorbitol, trimethylolpropane, polyethylene glycol, polypropylene glycol, triethylene glycol, dipropylene glycol, and propylene glycol are preferable, and glycerin, diglycerin, sorbitol, trimethylolpropane, and PEG400 are particularly preferable from a viewpoint of improving the water solubility.

From a viewpoint of the flexibility of the finally obtained liquid detergent package capsule or the like, glycerin and sorbitol are preferably used in combination, and contents of glycerin and sorbitol at this time is preferably glycerin: sorbitol = 1: 0.1 to 5.3, more preferably 1: 0.2 to 5.0, and still more preferably 1: 0.4 to 4.0 in a weight ratio.

The content of the plasticizing agent is preferably 8 parts by mass to 55 parts by mass, more preferably 10 parts by mass to 50 parts by mass, and still more preferably 16 parts by mass to 50 parts by mass with respect to 100 parts by mass of the polyvinyl alcohol resin. In the case where the content of the plasticizing agent is less than 8 parts by mass, the flexibility of the water-soluble film tends to decrease. In the case where the blending ratio of the plasticizing agent exceeds 55 parts by mass, the tensile strength of the water-soluble film tends to decrease and bleed-out of the plasticizing agent tends to occur more easily, and the pressure-resisting strength of the finally obtained liquid detergent package capsule tends to decrease.

The water-soluble film according to the present invention contains silica particles. By containing the silica particles, the tensile strength of the water-soluble film and the pressure-resisting strength of the package capsule to be obtained can be improved, and an anti-blocking effect of preventing adhesion between films can also be obtained.

The silica particles used in the present invention are silica particles that are not hydrophobized, and silica particles that are hydrophobized are excluded. The silica particles may be a natural product or a synthetic product (a wet method or a dry method) and are silica particles whose particle surfaces are not subjected to a hydrophobization treatment. In particular, wet-type silica particles produced by the wet method such as a precipitation method or a gel method, or dry-type silica particles produced by a combustion method based on a combustion reaction of silicon compounds, which are silica particles whose particle surface is not modification-treated are preferable. It is presumed that such wet-type silica particles or such dry-type silica particles contain hydrophilic groups such as silanol groups on the surfaces thereof. Even in the case of the wet-type silica particles, hydrophobic silica obtained by subjecting the hydrophilic groups on the particle surfaces such as silanol groups to a hydrophobization treatment with a surface treatment agent such as polydimethylsiloxane, methylchlorosilane, or hexamethyldisilazane is not preferable because the tensile strength of the water-soluble film and the pressure-resisting strength of the finally obtained liquid detergent package capsule cannot be improved.

The silica particles used in the present invention have an average particle diameter of 0.1 µm to 4.6 µm and a specific surface area of 10 m²/g to 490 m²/g.

The average particle diameter of the silica particles is required to be 0.1 µm to 4.6 µm, preferably 0.5 µm to 4.3 µm, and more preferably 1.0 µm to 4.0 µm. In the case where the silica particles have an average particle diameter of less than 0.1 µm, the anti-blocking effect of the obtained water-soluble film cannot be obtained. In the case where the silica particles have an average particle diameter exceeding 4.6 µm, the tensile strength and the transparency of the obtained water-soluble film decrease, and the pressure-resisting strength of the finally obtained liquid detergent package capsule also decreases. In particular, the average particle diameter of the silica particles is, for example, 1.5 µm to 4.6 µm for precipitated silica, 1.7 µm to 3.9 µm for gel process silica, and 0.15 µm for combustion method silica.

The specific surface area of the silica particles is required to be 10 m²/g to 490 m²/g, preferably 20 m²/g to 400 m²/g, and more preferably 45 m²/g to 300 m²/g. In the case where the silica particles have a specific surface area of less than 10 m²/g, the anti-blocking effect of the obtained water-soluble film cannot be obtained. In the case where the silica particles have a specific surface area exceeding 490 m²/g, the tensile strength and the transparency of the obtained water-soluble film decrease, and the pressure-resisting strength of the finally obtained liquid detergent package capsule also decreases. In particular, the specific surface area of the silica particles is, for example, 45 m²/g to 160 m²/g for the precipitated silica, 300 m²/g for gel process silica, and 140 m²/g to 300 m²/g for the combustion method silica.

To prevent blocking, the water-soluble film may or may not be subjected to attachment of powder or an embossing treatment for forming the surface into an uneven shape to one surface or both surfaces of the film.

The average particle diameter can be measured according to JIS K1150 (1994). Specifically, a 50% cumulative particle diameter of a cumulative volume distribution obtained by an electrical resistance type particle size measurement method or a laser diffraction type particle size distribution measurement method is defined as the average particle diameter. Alternatively, the average particle diameter can be measured according to JIS Z8825 (2013) or JIS Z8823-2 (2016). Specifically, a sample is dispersed by an ultrasonic dispersing machine or the like, and then measured by using a particle size analyzer in a laser diffraction scattering method (JIS Z8825 (2013)) or a centrifugation method (JIS Z8823-2 (2016)).

The specific surface area can be measured according to JIS K1150 (1994). Specifically, a nitrogen adsorption isotherm is obtained by a volume method, and the specific surface area is calculated by using the B.E.T formula. Alternatively, the specific surface area can be measured according to JIS Z8830 (2013). Specifically, nitrogen molecules are adsorbed on the surface of the sample, the amount of adsorption is measured, and the specific surface area is calculated by using the B. E. T formula.

The content of the silica particles in the water-soluble film according to the present invention is 0.5 parts by mass to 10 parts by mass with respect to 100 parts by mass of the polyvinyl alcohol resin. Further, at this time, 0.5 parts by mass to 10 parts by mass with respect to 100 parts by mass of the anionic group-modified polyvinyl alcohol resin is more preferable. In the case where the content of the silica particles is less than 0.5 parts by mass, the tensile strength of the water-soluble film and the pressure-resisting strength of the finally obtained liquid detergent package capsule cannot be improved. In the case where the content of the silica particles exceeds 10 parts by mass, the transparency of the water-soluble film decreases. The content of the silica particles is preferably 1.0 parts by mass to 8.0 parts by mass, and more preferably 1.0 parts by mass to 6.0 parts by mass with respect to 100 parts by mass of the polyvinyl alcohol resin. Furthermore, the content is 0.5 parts by mass to 10 parts by mass with respect to 100 parts by mass of the anionic group-modified polyvinyl alcohol resin. In the case where the content of the silica particles is less than 0.5 parts by mass, the tensile strength of the water-soluble film and the pressure-resisting strength of the finally obtained liquid detergent package capsule cannot be improved. In the case where the content of the silica particles exceeds 10 parts by mass, the transparency of the water-soluble film decreases. The content of the silica particles is preferably 1.0 parts by mass to 8.0 parts by mass, and more preferably 1.0 parts by mass to 6.0 parts by mass with respect to 100 parts by mass of the anionic group-modified polyvinyl alcohol resin.

The water-soluble film according to the present invention may contain, in addition to the silica particles described above, an antioxidant, a surfactant, a water-soluble polymer, and an additive within a range in which the object of the present invention is not impaired.

Examples of the antioxidant include sulfites such as sodium sulfite, bisulfites such as sodium bisulfite, and disulfites such as sodium disulfite. Among them, sodium sulfite is preferable. The content of the antioxidant is preferably 0.5 parts by mass to 2.0 parts by mass with respect to 100 parts by mass of the polyvinyl alcohol resin.

Examples of the surfactant include a nonionic surfactant, an anionic surfactant, a cationic surfactant, and an amphoteric surfactant. Among them, the surfactant is preferably a polyoxyethylene lauryl ether acetate sodium salt, a polyoxyethylene alkyl ether phosphate potassium salt, or a di-2-ethylhexyl sulfosuccinate sodium salt. These may be used alone or in combination. The content of the surfactant is preferably 0.1 parts by mass to 2.0 parts by mass with respect to 100 parts by mass of the polyvinyl alcohol resin. The surfactant can impart releasability from a cast surface during the production of the water-soluble film and can facilitate processing such as sealing (water sealing or heat sealing) when producing the liquid detergent package capsule.

Examples of the water-soluble polymer include sodium polyacrylate, polyethylene oxide, polyvinyl pyrrolidone, dextrin, chitosan, chitin, methyl cellulose, and hydroxy ethyl cellulose.

Examples of the additive include various fillers such as hydrophobic silica, aluminosilicate (zeolite), titanium oxide, talc, starch, and crosslinked acrylic fine particles, colorants, fragrances, bulking agents, antifoaming agents, release agents, ultraviolet absorbents, rust preventive agents, liquid paraffins, fluorescent whitening agents, chelating agents, bitter agents such as denatonium benzoate, fatty acid-based substances, and inorganic powders.

In addition, the water-soluble film may or may not contain particles (filler) other than the silica particles as long as the effects of the present invention are not impaired.

The moisture content of the water-soluble film according to the present invention obtained by film formation is preferably 4.0 mass% to 9.0 mass%, more preferably 5.5 mass% to 8.0 mass%, and still more preferably 5.5 mass% to 7.5 mass% in a normal temperature, normal pressure, and normal humidity environment. In the case where the moisture content is less than 4.0 mass%, the flexibility of the water-soluble film tends to decrease. In the case where the moisture content exceeds 9.0 mass%, the water-soluble films tend to adhere to each other easily.

The thickness of the water-soluble film according to the present invention obtained by the film formation is preferably 40 µm to 120 µm, more preferably 50 µm to 110 µm, and still more preferably 60 µm to 90 µm. A water-soluble film having a thickness of less than 40 µm tends to have insufficient tensile strength when being used for a liquid detergent package capsule, and a water-soluble film having a thickness exceeding 120 µm tends to have reduced formability and water solubility when being formed into a liquid detergent package capsule.

It is preferable that the obtained water-soluble film has a haze of 50% or less measured according to JIS K7136 (2000), which leads to good transparency. A water-soluble film having a haze exceeding 50% tends to have reduced transparency and design.

In the obtained water-soluble film according to the present invention, it is preferable that the tensile strength of the water-soluble film after storing a water-soluble film having a thickness of 75 µm for 7 days in an environment with a temperature of 40°C and a humidity of 80%RH is 19 MPa or more and the water-soluble film has a tensile strength that is 1.2 times or more with respect to a tensile strength of a control water-soluble film containing only no silica particles at the same thickness, since it can sufficiently withstand transportation and storage in a state in which a package capsule made of the water-soluble film is filled with a liquid detergent.

In this way, in the water-soluble film according to the present invention, silica particles that are not hydrophobized and are fine, and that have an average particle diameter and a specific surface area in predetermined ranges are blended. It is presumed that since surfaces of the silica particles are formed with a strong network structure formed by hydrogen bonding between a molecular chain of the anionic group-modified polyvinyl alcohol resin and hydrophilic groups such as a hydroxyl group on the surface of the blended silica particle, the tensile strength can be improved even when the water-soluble film is made thinner than in the related art, and the pressure-resisting strength of the finally obtained liquid detergent package capsule can also be improved. Therefore, by the hydrophobic silica which is subjected to a hydrophobization treatment and contains substantially no hydrophilic groups such as a hydroxyl group on the surface thereof among silica particles, the effect such as improving the tensile strength as in the water-soluble film according to the present invention is not exhibited. Similarly, particles (fillers) that do not form hydrogen bonds with the anionic group-modified polyvinyl alcohol resin, such as titanium oxide or starch, do not have the effect such as improving the tensile strength of the water-soluble film.

In the water-soluble film according to the present invention, it is presumed that since the blended silica particles are fine and small in amount, scattering of transmitted light is small and the transparency can be maintained.

The water-soluble film according to the present invention may be formed of only one layer or may be formed by stacking two or more water-soluble films of the same type or different types having a composition of the water-soluble film according to the present invention. The liquid detergent package capsule using the water-soluble film according to the present invention is a capsule that is formed by bonding end edges of at least two of the water-soluble film according to the present invention and that includes a liquid detergent encapsulated therein. The liquid detergent package capsule is produced by filling and sealing contents with a heat seal or a water seal. The liquid detergent package capsule is preferably formed by a thermoforming method or a vertical bag form-fill-seal (FFS) method, and more preferably formed by a thermoforming method.

A method for producing the water-soluble film includes a step of preparing an aqueous solution and a film formation step of producing the water-soluble film.

In the step of preparing the aqueous solution, a method for preparing the aqueous solution is not particularly limited, and examples thereof include a method of dissolving the polyvinyl alcohol resin, the plasticizing agent, the surfactant, and the additive such as a filler in a dissolution tank and a method of kneading the polyvinyl alcohol resin in a wet state with the plasticizing agent, the surfactant, and the additive such as a filler by using a twin-screw extruder.

In the step of producing the water-soluble film, a method of producing a water-soluble film made of the polyvinyl alcohol resin is not particularly limited, and adoptable examples thereof include a method in which an aqueous solution or an aqueous solvent solution of a composition of the water-soluble film made of the polyvinyl alcohol resin is supplied to a surface (including a surface of a metal belt) of a rotating metal roll which is a support member using a known device, and peeling from the surface (including the surface of the metal belt) of the metal roll and winding are performed while drying. As the supplying method, known methods such as a solution casting method (casting method) and a roll coating method can be adopted.

Further, as necessary, to perform the embossing treatment, for example, matte embossing treatment on the water-soluble film, an embossing pattern may be applied while heating and pressing the water-soluble film between biaxial rollers having embossed uneven shapes on surfaces thereof.

The liquid detergent package capsule produced by the thermoforming method can be produced, for example, by following the water-soluble film along an inner wall surface of a cavity having a predetermined capacity formed in a mold to form a bottom water-soluble film formed with a recess having a predetermined capacity, filling the recess with a predetermined amount of liquid detergent, then, coating a predetermined amount of water to one surface side of a top water-soluble film made of the water-soluble film, and crimping a predetermined surface of the bottom water-soluble film located at a peripheral edge of the cavity in the mold and a water-coated surface of the top water-soluble film. The depth of the liquid detergent package capsule can be appropriately adjusted within a range in which deep drawing can be withstood.

The liquid detergent package capsule produced by the FFS method can be produced by folding the water-soluble film vertically, heating and sealing overlapped ends vertically and horizontally, filling the folded water-soluble film with the liquid detergent, and sealing an upper portion thereof.

The liquid detergent package capsule of the present invention may seal the liquid detergent and a powder detergent and/or a gel agent therein. A single agent may be sealed and packaged, or two or more agents may be separately sealed and packaged to form a single-package-type multi-chamber detergent package capsule.

The liquid detergent package capsule according to the present invention obtained in this way has a pressure-resisting strength of 1.2 times or more the pressure-resisting strength of the control liquid detergent package capsule made of the control water-soluble film having the same thickness and containing only no silica particles. The pressure-resisting strength is preferably 700 N or more.

According to such a liquid detergent package capsule of the present invention, even when the thickness of the water-soluble film that forms the liquid detergent package capsule is reduced or the shape of the liquid detergent package capsule is complicated, it is possible to prevent breakage of the liquid detergent package capsule starting from a portion other than the attaching surface while maintaining the transparency of the water-soluble film.

The pressure-resisting strength of the liquid detergent package capsule refers to maximum compression force until the liquid detergent package capsule is compressed and ruptured.

### EXAMPLES

Examples of the present invention will be described in detail below, but the scope of the present invention is not limited to these Examples.

### (Anionic Group-Modified Polyvinyl Alcohol Resin (Modified PVA resin))

As a modified PVA resin, maleic acid-modified polyvinyl alcohol resins having a modification degree, a polymerization degree, an average saponification degree, and a 4 mass% aqueous solution viscosity at 20°C (hereinafter referred to as 4 mass% viscosity) shown in Table 1 below were used.

### [Table 1]

**Table 1**

| | A-1 | A-2 | A-3 |
|---|---|---|---|
| Modification degree (mol%) | 1.9 | 3.6 | 1.9 |
| Polymerization degree | 1700 | 1700 | 1000 |
| Average saponification degree (mol%) | 88 | 94 | 88 |
| 4 mass% viscosity (mPa·s) | 28 | 25 | 10.5 |

### (Plasticizing Agent and other Additives)

Plasticizing agent
B-1: Glycerin
B-2: Sorbitol
Other additives
Antioxidant
C-1: Sodium sulfite
Surfactant
D-1: Polyoxyethylene lauryl ether acetate sodium salt
D-2: Polyoxyethylene alkyl ether phosphate potassium salt
D-3: Di-2-ethylhexyl sulfosuccinate sodium salt

### Example 1

### (Preparation of Water-Soluble Film Composition)

As shown in Table 2, a water-soluble film composition containing the above-described plasticizing agent, the antioxidant, the surfactant, the particles, and water was prepared by using 100 parts by mass of A-1 among the modified PVA resins shown in Table 1. Blending amounts of the plasticizing agent, the antioxidant, and the surfactant, and the type, the average particle diameter, the specific surface area, and the blending amount of the particles are also shown in Table 2. A water-soluble film composition containing only no silica particles was prepared as a comparative control and was shown as Ref in Table 2. The amount of water was adjusted such that a viscosity of the water-soluble film composition (measured at 85°C with a B-type viscosity meter) was 3000 mPa s.

### [Table 2]

**Table 2**

| No. | Modified PVA resin | Plasticizing agent | Particles | | | | Antioxidant | Surfactant |
|---|---|---|---|---|---|---|---|---|
| | | | Type | Average particle diameter (µm) | Specific surface area (m²/g) | Blending amount (parts by mass) | | |
| 1 | A-1 (100) | B-1 (25) | Precipitated silica | 1.7 | 45 | 6 | C-1 (1.5) | D-1 (0.5) |
| 2 | | | | 2.4 | 50 | 6 | | |
| 3 | | | | 1.5 | 150 | 1 | | |
| 4 | | | | | | 2 | | |
| 5 | | | | | | 4 | | |
| 6 | | | | | | 6 | | |
| 7 | | | | 2.4 | 160 | 6 | | |
| 8 | | | | 3.3 | 130 | 6 | | |
| 9 | | | Gel process silica | 3.9 | 300 | 6 | | |
| 10 | | | Precipitated silica | 4.6 | 95 | 6 | | |
| 11 | | | Gel process silica | 1.7 | 300 | 4 | | |
| 12 | | | | | | 6 | | |
| 13 | | | Combustion method silica | 0.15 | 140 | 6 | | |
| 14 | | | | 0.15 | 200 | 6 | | |
| 15 | | B-2 (15) | | 0.15 | 300 | 6 | | |
| 16* | | | Precipitated silica | 1.5 | 150 | 12 | | |
| 17* | | | Gel process silica | 6.2 | 300 | 6 | | |
| 18* | | | | 3.9 | 500 | 6 | | |
| 19* | | | | 4.0 | 700 | 6 | | |
| 20* | | | | 1.8 | 300 | 12 | | |
| 21* | | | Hydrophobic silica | 6.2 | 300 | 6 | | |
| 22* | | | Aluminosilicate | 3.0 | N.D | 6 | | |
| 23* | | | Titanium oxide | 0.2 | N.D | 6 | | |
| 24* | | | Talc | 3.3 | N.D | 6 | | |
| 25* | | | Starch | 15.0 | N.D | 6 | | |
| 26* | | | Crosslinked acrylic fine particles | 5.0 | N.D | 6 | | |
| Ref1 | | | - | - | - | - | | |

| | | | | | | | | |
|---|---|---|---|---|---|---|---|---|
| Note 1) Nos. 1 to 15: Examples, Nos. 16* to 26*: Comparative Examples, Refl: reference Note 2) Numerical value in (): parts by mass Note 3) Particles of Nos. 22* to 26* No. 22*: Aluminosilicate SILTON JC-30 (product name), manufactured by Mizusawa Chemical Industry Co., Ltd. No. 23*: Titanium oxide TIPAQUE W-10 (product name), manufactured by Ishihara Sangyo Co., Ltd. No. 24*: Talc Soapstone A (product name), manufactured by Imerys Specialities Japan Co., Ltd. No. 25*: Starch Nisshokupar (product name), manufactured by Nihon Shokuhin Kako Co., Ltd. No. 26*: Crosslinked acrylic fine particles | | | | | | | | |

ENEOS Unipowder NMB -0520C (product name), manufactured by JX Liquid Crystal Co., Ltd.

In Table 2, the average particle diameter and the specific surface area of the particles were measured by the following measurement methods.

### (1-1) Average Particle Diameter of Precipitated Silica

This is a 50% cumulative particle diameter of a cumulative volume distribution measured according to JIS K1150 (1994) by using electrical resistance type particle size measurement.

### (1-2) Average Particle Diameters of Gel Process Silica and Hydrophobic Silica

This is a 50% cumulative particle diameter of a cumulative volume distribution measured according to JIS K1150 (1994) by using a laser diffraction type particle size measurement device.

### (1-3) Average Particle Diameter of Combustion Method Silica

This is a 50% cumulative particle diameter of a cumulative volume distribution measured by using a particle size analyzer in a laser diffraction scattering method (JIS Z8825 (2013)) or a centrifugation method (JIS Z8823-2 (2016)) after the dispersion by an ultrasonic dispersing machine.

### (2-1) Specific Surface Areas of Precipitated Silica Particles, Gel Process Silica Particles, and Hydrophobic Silica Particles

The nitrogen adsorption isotherm is obtained by a volume method according to JIS K1150 (1994), and the specific surface area is calculated by using the B.E.T formula.

### (2-2) Specific Surface Area of Combustion Method Silica Particles

The nitrogen molecules are adsorbed on a surface of the sample, the amount of adsorption is measured, and the specific surface area is calculated by using the B. E. T formula, according to JIS Z8830 (2013).

### (Film Formation of Water-Soluble Film)

The water-soluble film composition having the composition shown in Table 2 and adjusted to have a viscosity of 3000 mPa·s measured by the B-type viscosity meter at 85°C was prepared. Then, a metal roll having a smooth surface as a cast surface was prepared, and the surface thereof was wiped and cleaned with a cloth wet with pure water. Next, while increasing the surface temperature of the metal roll to about 80°C, the water-soluble film composition having the composition shown in Table 2 was cast onto the surface of the metal roll. The metal roll was dried for 8 minutes while being rotated to form a water-soluble film having a thickness of 75 µm.

At this time, the surface of the water-soluble film in contact with the metal roll is a cast surface, and the surface of the water-soluble film in direct contact with air is an air surface.

### (Preparation of Liquid Detergent)

A liquid detergent containing 100 mass% in a total of 62.5 mass% of TOP SUPER NANOX (product name, manufactured by Lion Corporation), which is a liquid detergent, and 37.5 mass% of polyoxyethylene monolaurate (EMANON 1112, manufactured by Kao Corporation) was prepared. A moisture content of the prepared liquid detergent was measured by using a Karl-Fischer method moisture measurement device AQV-2200s (product name, manufactured by Hiranuma Sangyo Co., Ltd.). The moisture content of the prepared liquid detergent was 22 mass%.

### (Preparation of Package Capsule)

A package capsule was formed by using two of the formed water-soluble films having a thickness of 75 µm. The first water-soluble film was set such that a cast surface side (a surface on a side in contact with the metal roll during the film formation) of the water-soluble film faces an inner wall surface of the cavity on a mold having a cavity (a box-shaped cavity having rounded corners with an opening portion area of 2000 mm² and a depth of 15 mm) in a state of being stretched so as not to wrinkle or sag. The water-soluble film was heated at about 90°C for 5 seconds, the water-soluble film was caused to follow the cavity by vacuum forming to form a bottom water-soluble film having a recess, and then the recess was filled with about 22 mL of the liquid detergent prepared in advance. Next, the second water-soluble film was used as the top water-soluble film, and water was applied to the air surface side (the surface on the side directly in contact with air at the time of the film formation) by using lab towel (product name, manufactured by Unichemy Co., Ltd.) wet with water to adjust the amount of water to 44 g/m² to 54 g/m². Thereafter, the water-coated surface of the top water-soluble film and a recess peripheral edge surface (air surface side) of the bottom water-soluble film set in the cavity and having the recess filled with the liquid detergent were crimped and bonded by using a 1.5 kg metal roll and then hold for about 1 minute 30 seconds. Further, the evacuation was stopped, and the package capsule was taken out from the cavity to prepare the liquid detergent package capsule.

The tensile strength and an improvement degree in the tensile strength of the formed water-soluble film, and the pressure-resisting strength and an improvement degree in the pressure-resisting strength of the prepared liquid detergent package capsule were measured by the following measurement methods, and results thereof are shown in Table 3.

### (Measurement Methods)

### 1. Measurement Method for Tensile Strength of Water-Soluble Film

The obtained water-soluble film was stored in an environment of a temperature of 40°C and a humidity of 80%RH for 7 days, and then the tensile strength was measured based on JIS K7127 (1999) by using a tensile tester AGS-1kN (product name, manufactured by Shimadzu Corporation). Measurement conditions are as follows.
Measurement environment: 23°C, 50%RH
Film test piece: width 15 mm × length 150 mm
Distance between chucks: 100 mm
Tensile test speed: 300 mm/min

### 2. Improvement Degree in Tensile Strength of Water-Soluble Film

The improvement degree in the tensile strength of the water-soluble films formed by using the water-soluble film compositions of Nos. 1 to 15 and Nos. 16* to 26* in Table 2 were calculated with respect to, as a reference, the tensile strength of the control water-soluble film formed by using the water-soluble film composition containing only no silica particles of Ref1 in Table 2.

### 3. Measurement Method for Haze of Water-Soluble Film

The haze of the obtained water-soluble film was measured by using a haze meter NDH 5000 (product name, manufactured by Nippon Denshoku Industries Co., Ltd.) according to JIS K7136 (2000).

### 4. Pressure-Resisting Strength of Liquid Detergent Package Capsule

The prepared liquid detergent package capsule was stored in an environment of a temperature of 23°C and a humidity of 50%RH for 30 minutes. The liquid detergent package capsule after the storage was loosely wrapped in a 20 µm low-density polyethylene bag as an exterior to prevent the content liquid from scattering and was compressed by using a tensile tester AGS-1kN (product name, manufactured by Shimadzu Corporation), and the maximum compression force until the liquid detergent package capsule burst was measured. Measurement conditions are as follows.
Measurement environment: 23°C, 50%RH
Distance between chucks: 50 mm
Compression test speed: 150 mm/min

### 5. Improvement Degree in Pressure-Resisting Strength of Liquid Detergent Package Capsule

The improvement degrees in the pressure-resisting strength of the liquid detergent package capsules due to the water-soluble films formed by using the water-soluble film compositions of Nos. 1 to 15 and Nos. 16* to 26* in Table 2 were calculated with respect to, as a reference, the pressure-resisting strength of the liquid detergent package capsule due to the control water-soluble film formed by using the water-soluble film composition containing only no silica particles of Ref1 in Table 2.

### [Table 3]

**Table 3**

| No. | Water-soluble film | | | Liquid detergent package capsule | |
|---|---|---|---|---|---|
| | Tensile strength (MPa) | Improvement degree (times) | Haze (%) | Pressure-resisting strength (N) | Improvement degree (times) |
| 1 | 22 | 1.4 | 25 | 820 | 1.4 |
| 2 | 20 | 1.3 | 29 | 800 | 1.4 |
| 3 | 20 | 1.3 | 4 | 770 | 1.3 |
| 1 | 21 | 1.3 | 8 | 790 | 1.4 |
| 5 | 22 | 1.4 | 14 | 960 | 1.7 |
| 6 | 23 | 1.4 | 26 | 1040 | 1.8 |
| 7 | 21 | 1.3 | 27 | 730 | 1.3 |
| 8 | 25 | 1.6 | 33 | 1140 | 2.0 |
| 9 | 24 | 1.5 | 30 | 1080 | 1.9 |
| 10 | 22 | 1.4 | 33 | 940 | 1.6 |
| 11 | 25 | 1.6 | 23 | 1000 | 1.7 |
| 12 | 26 | 1.6 | 29 | 940 | 1.6 |
| 13 | 26 | 1.6 | 29 | 1360 | 2.3 |
| 14 | 23 | 1.4 | 43 | 1160 | 2.0 |
| 15 | 23 | 1.4 | 49 | 970 | 1.7 |
| 16* | 22 | 1.4 | 60 | 1290 | 2.2 |
| 17* | 18 | 1.1 | 30 | 600 | 1.0 |
| 18* | 18 | 1.1 | 33 | 610 | 1.1 |
| 19* | 18 | 1.1 | 48 | 510 | 0.9 |
| 20* | 22 | 1.4 | 58 | 940 | 1.6 |
| 21* | 14 | 0.9 | 67 | 250 | 0.4 |
| 22* | 18 | 1.1 | 11 | 520 | 0.9 |
| 23* | 17 | 1.1 | 99 | 490 | 0.8 |
| 24* | 16 | 1.0 | 24 | 530 | 0.9 |
| 25* | 14 | 0.9 | 20 | 390 | 0.7 |
| 26* | 15 | 0.9 | 14 | 520 | 0.9 |
| Ref1 | 16 (Reference) | 1.0 | 1 | 580 (Reference) | 1.0 |

As is clear from Table 3, in the water-soluble films of Nos. 1 to 15 which are Examples, since the precipitated silica particles, the gel process silica particles, or the combustion method silica particles that are not hydrophobized and have an average particle diameter of 0.1 µm to 4.6 µm and a specific surface area of 10 m²/g to 490 m²/g are contained in 0.5 parts by mass to 10 parts by mass with respect to 100 parts by mass of the modified PVA resin, the tensile strength thereof is 19 MPa or more, and the improvement degree with respect to the tensile strength of the control water-soluble film containing only no silica particles of Ref1 is 1.2 times or more. In addition, the haze is 50% or less, and the transparency is also good. In addition, in the liquid detergent package capsules using the water-soluble films of Nos. 1 to 15, the pressure-resisting strength is 700 N or more, and the improvement degree in the pressure-resisting strength with respect to the liquid detergent package capsule using the control water-soluble film containing only no silica particles of Ref1 is 1.2 times or more.

In contrast, even in the case where the precipitated silica particles or the gel process silica particles that are not hydrophobized are used, the water-soluble films of No. 17* having the average particle diameter of the contained silica particles exceeding 4.6 µm and of Nos. 18* and No. 19* having a specific surface area exceeding 490 m²/g have a haze of 50% or less and good transparency, but have a tensile strength of less than 19 MPa and an improvement degree with respect to the tensile strength of the control water-soluble film containing only no the silica particles of Ref1 being less than 1.2 times. In the liquid detergent package capsules using the water-soluble films of No. 17*, No. 18*, and No. 19*, the pressure-resisting strength is less than 700 N, and the improvement degree in the pressure-resisting strength with respect to the liquid detergent package capsule using the control water-soluble film containing only no silica particles of Ref1 is less than 1.2 times.

In addition, in No. 16* and No. 20* in which the blending amount of the precipitated silica particles exceeds 10 parts by mass with respect to 100 parts by mass of the modified PVA resin, the tensile strength of the obtained water-soluble film is 19 MPa or more, and the improvement degree with respect to the tensile strength of the control water-soluble film containing only no silica particles of Ref1 is 1.2 times or more, whereas in the liquid detergent package capsules using the water-soluble films of No. 16* and No. 20*, the pressure-resisting strength is 700 N or more, and the improvement degree in the pressure-resisting strength with respect to the liquid detergent package capsule using the control water-soluble film containing only no silica particles of Ref1 is 1.2 times or more. However, the haze of the obtained water-soluble film exceeds 50%, and the transparency is poor.

In No. 21* in which hydrophobic silica particles having a specific surface area of 10 m²/g to 490 m²/g were used as the silica particles, the tensile strength of the obtained water-soluble film is less than 19 MPa, the improvement degree with respect to the tensile strength of the control water-soluble film containing only no silica particles of Ref1 is less than 1.2 times, the haze exceeds 50%, and the transparency is poor. In the liquid detergent package capsule using the water-soluble film of No. 21*, the pressure-resisting strength is less than 700 N, and the improvement degree in the pressure-resisting strength with respect to the liquid detergent package capsule using the control water-soluble film containing only no silica particles of Ref1 is less than 1.2 times.

Further, instead of the silica particles, in the cases of aluminosilicate (No. 22*), titanium oxide (No. 23*), talc (No. 24*), starch (No. 25*), and crosslinked acrylic fine particles (No. 26*), the tensile strength of the obtained water-soluble film is less than 19 MPa, and the improvement degree with respect to the tensile strength of the control water-soluble film containing only no silica particles of Ref1 is less than 1.2 times, and the haze in the case of No. 23* exceeds 50% and the transparency is poor. In the liquid detergent package capsules using any of the water-soluble films of No. 22*, No. 23*, No. 24*, No. 25*, and No. 26*, the pressure-resisting strength is less than 700 N, and the improvement degree in the pressure-resisting strength with respect to the liquid detergent package capsule using the control water-soluble film containing only no silica particles of Ref1 is less than 1.2 times.

The moisture contents of the water-soluble films after being stored in an environment of a temperature of 40°C and a humidity of 80%RH for 7 days in Nos. 1 to 15, Nos. 16* to 26*, and Ref1 were 23.1 mass% to 27.2 mass%. In this way, the moisture contents of the water-soluble films after being stored in the environment of a temperature of 40°C and a humidity of 80%RH for 7 days in Nos. 1 to 15, Nos. 16* to 26*, and Ref1 were substantially the same value.

### Example 2

A water-soluble film composition containing a modified PVA resin, a plasticizing agent, an antioxidant, a surfactant, and particles that are shown in Table 4 and water was kneaded in a wet state by using a twin-screw extruder to adjust the concentration of the water-soluble film composition to 46 mass% to 48 mass%. Blending amounts of the modified PVA resin, the plasticizing agent, the antioxidant, and the surfactant, and the type, the average particle diameter, the specific surface area, and the blending amount of the particles are also shown in Table 4.

### [Table 4]

**Table 4**

| No. | Modified PVA resin | Plasticizing agent | Particles | | | | Antioxidant | Surfactant |
|---|---|---|---|---|---|---|---|---|
| | | | Type | Average particle diameter (µm) | Specific surface area (m²/g) | Blending amount (parts by mass) | | |
| 27 | A-1 (100) | B-1 (30) | Precipitated silica | 3.3 | 130 | 6 | C-1 (1.1) | D-2 (0.2) |
| Ref2 | | | - | - | - | - | | |
| 28 | A-1 (40) | B-1 (21) | Precipitated silica | 1.5 | 150 | 4 | | |
| Ref3 | A-3 (60) | | - | - | - | - | | |

| | | | | | | | | |
|---|---|---|---|---|---|---|---|---|
| Note) Numerical value in (): parts by mass | | | | | | | | |

As for the water-soluble film composition prepared to have the composition shown in Table 4, the water-soluble film composition at 90°C was cast from a T die onto a metal roll surface (first drying roll) whose surface temperature was maintained at 86°C. The water-soluble film composition was dried for 80 seconds while rotating the metal roll (first drying roll), was peeled off from the first drying roll and then, dried by second and subsequent drying rolls such that one surface and the other surface of the PVA film were alternately brought into contact with the respective drying rolls, thereby forming a water-soluble film having a thickness of 75 µm. The tensile strength, the haze, and the improvement degree with respect to the tensile strength of the control water-soluble films containing only no silica particles of Ref2 and Ref3, of the prepared water-soluble film were measured in the same manner as in Example 1, and results thereof are shown in Table 5. Further, a liquid detergent package capsule was produced in the same manner as in Example 1 by using the obtained water-soluble film, the pressure-resisting strength thereof and the improvement degree with respect to the pressure-resisting strength of a liquid detergent package capsule using the control water-soluble films containing only no silica particles of Ref2 and Ref3 were measured in the same manner as in Example 1, and results thereof are also shown in Table 5.

### [Table 5]

**Table 5**

| No. | Water-soluble film | | | Liquid detergent package capsule | |
|---|---|---|---|---|---|
| | Tensile strength (MPa) | Improvement degree (times) | Haze (%) | Pressure-resisting strength (N) | Improvement degree (times) |
| 27 | 23 | 1.4 | 38 | 1640 | 2.0 |
| Ref2 | 17 (Reference) | 1.0 | 3 | 810 (Reference) | 1.0 |
| 28 | 19 | 1.6 | 25 | 1270 | 1.6 |
| Ref3 | 12 (Reference) | 1.0 | 3 | 790 (Reference) | 1.0 |

As is clear from Table 5, in the water-soluble films of No. 27 and No. 28, which are Examples, the tensile strength is 19 MPa or more, and the improvement degree with respect to the tensile strength of the control water-soluble films containing only no silica particles of Ref2 and Ref3 is 1.2 times or more. In addition, the haze is 50% or less, and the transparency is also good. In addition, in the liquid detergent package capsules using the water-soluble films of No. 27 and No. 28, the pressure-resisting strength is 700 N or more and the improvement degree of the pressure-resisting strength with respect to the liquid detergent package capsule using the control water-soluble films containing only no silica particles of Ref2 and Ref3 is 1.2 times or more.

The moisture contents of the water-soluble films after being stored in an environment of a temperature of 40°C and a humidity of 80%RH for 7 days were 24.9 mass% in No. 27 and 23.2 mass% in No. 28, which are Examples, 24.7 mass% in Ref2, and 24.0 mass% in Ref3. In this way, the moisture contents of the water-soluble films after being stored in the environment of a temperature of 40°C and a humidity of 80%RH for 7 days in No. 27, No. 28, Ref2, and Ref3 were substantially the same value.

### Example 3

A water-soluble film composition containing a modified PVA resin, a plasticizing agent, an antioxidant, a surfactant, particles, which are shown in Table 6, and water was prepared in the same manner as in Example 1. Blending amounts of the modified PVA resin, the plasticizing agent, the antioxidant, and the surfactant, and the type, the average particle diameter, the specific surface area, and the blending amount of the particles are also shown in Table 6.

### [Table 6]

**Table 6**

| No. | Modified PVA resin | Plasticizing agent | Particles | | | | Antioxidant | Surfactant |
|---|---|---|---|---|---|---|---|---|
| | | | Type | Average particle diameter (µm) | Specific surface area (m²/g) | Blending amount (parts by mass) | | |
| 29 | A-1 (100) | B-1 (21) | Precipitated silica | 1.5 | 150 | 4 | C-1 (1.1) | D-2 (0.2) |
| Ref4 | | | - | - | - | - | | |

| | | | | | | | | |
|---|---|---|---|---|---|---|---|---|
| Note) Numerical value in (): parts by mass | | | | | | | | |

The tensile strength, the haze, and the improvement degree with respect to the tensile strength of the control water-soluble film containing only no silica particles of Ref4, of a water-soluble film obtained by forming the water-soluble film composition prepared in the composition shown in Table 6 in the same manner as in Example 1 were measured in the same manner as in Example 1, and results thereof are shown in Table 7. Further, a liquid detergent package capsule was produced in the same manner as in Example 1 by using the obtained water-soluble film, the pressure-resisting strength thereof and the improvement degree with respect to the pressure-resisting strength of a liquid detergent package capsule using the control water-soluble film containing only no silica particles of Ref4 were measured in the same manner as in Example 1, and results thereof are also shown in Table 7.

### [Table 7]

**Table 7**

| No. | Water-soluble film | | | Liquid detergent package capsule | |
|---|---|---|---|---|---|
| | Tensile strength (MPa) | Improvement degree (times) | Haze (%) | Pressure-resisting strength (N) | Improvement degree (times) |
| 29 | 25 | 1.3 | 17 | 1620 | 1.9 |
| Ref4 | 19 (Reference) | 1.0 | 3 | 860 (Reference) | 1.0 |

As is clear from Table 7, in the water-soluble film of No. 29, which is Example, the tensile strength is 19 MPa or more, and the improvement degree with respect to the tensile strength of the control water-soluble film containing only no silica particles of Ref4 is 1.2 times or more. In addition, the haze is 50% or less, and the transparency is also good. In addition, in the liquid detergent package capsule using the water-soluble film of No. 29, the pressure-resisting strength is 700 N or more, and the improvement degree in the pressure-resisting strength with respect to the liquid detergent package capsule using the control water-soluble film containing only no silica particles of Ref is 1.2 times or more.

The moisture contents of the water-soluble films after being stored in an environment of a temperature of 40°C and a humidity of 80%RH for 7 days were 23.1 mass% in No. 29 which is Example and 22.9 mass% in Ref4. In this way, the moisture contents of the water-soluble films in No. 29 and Ref4 after being stored in the environment of a temperature of 40°C and a humidity of 80%RH for 7 days were substantially the same value.

### Example 4

A water-soluble film composition containing a modified PVA resin, a plasticizing agent, an antioxidant, a surfactant, particles, which are shown in Table 8, and water was prepared in the same manner as in Example 1. Blending amounts of the modified PVA resin, the plasticizing agent, the antioxidant, and the surfactant, and the type, the average particle diameter, the specific surface area, and the blending amount of the particles are also shown in Table 8.

### [Table 8]

**Table 8**

| No. | Modified PVA resin | Plasticizing agent | Particles | | | | Antioxidant | Surfactant |
|---|---|---|---|---|---|---|---|---|
| | | | Type | Average particle diameter (µm) | Specific surface area (m²/g) | Blending amount (parts by mass) | | |
| 30 | A-1 (100) | B-1 (16) | Precipitated silica | 1.5 | 150 | 4 | C-1 (1.1) | D-2 (0.2) |
| Ref5 | | | - | - | - | - | | |

| | | | | | | | | |
|---|---|---|---|---|---|---|---|---|
| Note) Numerical value in (): parts by mass | | | | | | | | |

The tensile strength, the haze, and the improvement degree with respect to the tensile strength of the control water-soluble film containing only no silica particles of Ref5, of a water-soluble film obtained by forming the water-soluble film composition prepared in the composition shown in Table 8 in the same manner as in Example 1 were measured in the same manner as in Example 1, and results thereof are shown in Table 9. Further, a liquid detergent package capsule was produced in the same manner as in Example 1 by using the obtained water-soluble film, the pressure-resisting strength thereof and the improvement degree with respect to the pressure-resisting strength of a liquid detergent package capsule using the control water-soluble film containing only no silica particles of Ref5 were measured in the same manner as in Example 1, and results thereof are also shown in Table 9.

### [Table 9]

**Table 9**

| No. | Water-soluble film | | | Liquid detergent package capsule | |
|---|---|---|---|---|---|
| | Tensile strength (MPa) | Improvement degree (times) | Haze (%) | Pressure-resisting strength (N) | Improvement degree (times) |
| 30 | 27 | 1.3 | 18 | 2010 | 1.8 |
| Ref5 | 21 (Reference) | 1.0 | 2 | 1120 (Reference) | 1.0 |

As is clear from Table 9, in the water-soluble film of No. 30, which is Example, the tensile strength is 19 MPa or more, and the improvement degree with respect to the tensile strength of the control water-soluble film containing only no silica particles of Ref5 is 1.2 times or more. In addition, the haze is 50% or less, and the transparency is also good. In addition, in the liquid detergent package capsule using the water-soluble film of No. 30, the pressure-resisting strength is 700 N or more, and the improvement degree in the pressure-resisting strength with respect to the liquid detergent package capsule using the control water-soluble film containing only no silica particles of Ref5 is 1.2 times or more.

The moisture contents of the water-soluble films after being stored in an environment of a temperature of 40°C and a humidity of 80%RH for 7 days were 22.0 mass% in No. 30 which is Example and 21.7 mass% in Ref5. In this way, the moisture contents of the water-soluble films in No. 30 and Ref5 after being stored in the environment of a temperature of 40°C and a humidity of 80%RH for 7 days were substantially the same value.

### Example 5

As shown in Table 10, a water-soluble film composition containing a plasticizing agent, an antioxidant, a surfactant, particles, which are shown in Table 10, and water was prepared in the same manner as in Example 1 by using 100 parts by mass of A-2 in the modified PVA resins shown in Table 1. Blending amounts of the plasticizing agent, the antioxidant, and the surfactant, and the type, the average particle diameter, the specific surface area, and the blending amount of the particles are shown in Table 10.

### [Table 10]

**Table 10**

| No. | Modified PVA resin | Plasticizing agent | Particles | | | | Antioxidant | Surfactant |
|---|---|---|---|---|---|---|---|---|
| | | | Type | Average particle diameter (µm) | Specific surface area (m²/g) | Blending amount (parts by mass) | | |
| 31 | A-2 (100) | B-1 (30) | Precipitated silica | 1.5 | 150 | 6 | C-1 (1.5) | D-3 (0.4) |
| 32 | | B-2 (15) | Gel process silica | 1.7 | 300 | 4 | | |
| Ref6 | | | - | - | - | - | | |

| | | | | | | | | |
|---|---|---|---|---|---|---|---|---|
| Note) Numerical value in (): parts by mass | | | | | | | | |

The tensile strength, the haze, and the improvement degree with respect to the tensile strength of the control water-soluble film containing only no silica particles of Ref6, of a water-soluble film obtained by forming the water-soluble film composition prepared in the composition shown in Table 10 in the same manner as in Example 1 were measured in the same manner as in Example 1, and results thereof are shown in Table 11. Further, a liquid detergent package capsule was produced in the same manner as in Example 1 by using the obtained water-soluble film, the pressure-resisting strength thereof and the improvement degree with respect to the pressure-resisting strength of a liquid detergent package capsule using the control water-soluble film containing only no silica particles of Ref6 were measured in the same manner as in Example 1, and results thereof are also shown in Table 11.

### [Table 11]

**Table 11**

| No. | Water-soluble film | | | Liquid detergent package capsule | |
|---|---|---|---|---|---|
| | Tensile strength (MPa) | Improvement degree (times) | Haze (%) | Pressure-resisting strength (N) | Improvement degree (times) |
| 31 | 22 | 1.5 | 48 | 900 | 1.6 |
| 32 | 22 | 1.5 | 38 | 890 | 1.6 |
| Ref6 | 15 (Reference) | 1.0 | 3 | 560 (Reference) | 1.0 |

As is clear from Table 11, in the water-soluble films of No. 31 and No. 32, which are Examples, the tensile strength is 19 MPa or more, and the improvement degree with respect to the tensile strength of the control water-soluble film containing only no silica particles of Ref6 is 1.2 times or more. In addition, the haze is 50% or less, and the transparency is also good. In addition, in the liquid detergent package capsules using the water-soluble films of No. 31 and No. 32, the pressure-resisting strength is 700 N or more, and the improvement degree in the pressure-resisting strength with respect to the liquid detergent package capsule using the control water-soluble film containing only no silica particles of Ref6 is 1.2 times or more.

The moisture contents of the water-soluble films after being stored in an environment of a temperature of 40°C and a humidity of 80%RH for 7 days were 26.5 mass% in No. 31 and 26.2 mass% in No. 32, which are Examples, and 26.0 mass% in Ref6. In this way, the moisture contents of the water-soluble films in No. 31, No. 32, and Ref6 after being stored in the environment of a temperature of 40°C and a humidity of 80%RH for 7 days were substantially the same value.

### INDUSTRIAL APPLICABILITY

The water-soluble film according to the present invention can be used as a liquid detergent package capsule having improved design. The liquid detergent package capsule using the water-soluble film according to the present invention can be used as a detergent for business use or home use having improved design.

## Claims

1. A water-soluble film for a package capsule of a liquid detergent, comprising:
an anionic group-modified polyvinyl alcohol resin as a polyvinyl alcohol resin;
a plasticizing agent; and
silica particles that are not hydrophobized, wherein
the silica particles have an average particle diameter of 0.1 µm to 4.6 µm and a specific surface area of 10 m²/g to 490 m²/g, and are contained in 0.5 parts by mass to 10 parts by mass with respect to 100 parts by mass of the polyvinyl alcohol resin.

2. The water-soluble film for a package capsule of a liquid detergent according to claim 1, wherein
the plasticizing agent is contained in 8 parts by mass to 55 parts by mass with respect to 100 parts by mass of the polyvinyl alcohol resin.

3. The water-soluble film for a package capsule of a liquid detergent according to claim 1, wherein
for a tensile strength of the water-soluble film, a tensile strength of the water-soluble film after storing a water-soluble film having a thickness of 75 µm in an environment having a temperature of 40°C and a humidity of 80%RH for 7 days is 19 MPa or more and is 1.2 times or more with respect to a tensile strength of a control water-soluble film that contains only no silica particles and has the same thickness as the water-soluble film.

4. The water-soluble film for a package capsule of a liquid detergent according to claim 1, wherein
the water-soluble film has a haze of 50% or less.

5. A liquid detergent package capsule in which a liquid detergent is encapsulated in a capsule formed by bonding end edges of at least two of the water-soluble films according to any one of claims 1 to 4, having
a pressure-resisting strength 1.2 times or more a pressure-resisting strength of a control liquid detergent package capsule formed of a control water-soluble film that has the same thickness as the water-soluble film and contains only no silica particles.

6. The liquid detergent package capsule according to claim 5, wherein
the pressure-resisting strength of the liquid detergent package capsule is 700 N or more.
